# EUROPEAN PATENT APPLICATION

(11) **EP 3 819 728 A1**
(43) Date of publication of application: **12.05.2021**
(21) Application number: 20201548.3
(22) Date of filing: 13.10.2020
(51) Int. Cl.: G05B 19/042

(54) **AUTOMATIC DEVICE NAMING FOR FAST DEVICE REPLACEMENT**

(30) Priority: 05.11.2019 US 201916674553
(71) Applicant: Schneider Electric USA, Inc., Andover, MA 01810 (US)
(72) Inventor: JEFFERIES, Kevin M., Raleigh, NC North Carolina 27606-2623 (US); WHITE, Matthew L., Cary, NC North Carolina 27511 (US); FREEMAN, Alan E., Raleigh, NC North Carolina 27601 (US); WEILER, Richard K., Wake Forest, NC North Carolina 27587-6299 (US)
(74) Representative: Manitz Finsterwald Patent- und Rechtsanwaltspartnerschaft mbB

(57) **Abstract**

Techniques for automatically configuring a computing device in a computing environment are provided. One embodiment includes determining that the computing device has been added to a computing environment and that at least one feature of the computing device is unconfigured. Device name data specifying at least two potential device identifiers for the computing device is received from a plurality of endpoint devices communicatively coupled to the computing device. A first device identifier is selected from the at least two potential device identifiers and device configuration data associated with the first device identifier is requested from a device configuration server. The at least one feature of the computing device can then be configured using the device configuration data.

## Description

### BACKGROUND

The present disclosure relates to electronic device replacement, and more particularly, to techniques for automatically naming and configuring a replacement electronic device using lower-level device storage.

As the number of interconnected electronic devices continues to grow, it is increasingly important to efficiently manage the replacement of electronic devices and the configuration of new electronic devices. While historically engineers were required to manually configure replacement electronic devices, such a practice is very burdensome and inefficient in an environment with a substantial number of interconnected electronic devices. Additionally, as the configurability and flexibility of electronic devices has increased, these devices have become more complicated to configure and frequently require specialized knowledge and tools to configure. These difficulties are exacerbated in environments where, due to business reasons, downtime needs to be minimized. For example, a substantial amount of downtime in a factory environment can create bottlenecks in an assembly line and can delay production schedules, thereby incurring a significant cost for the business. As another example, a lengthy downtime of an electronic device that hosts a component of a website for a large retailer can cost the retailer a significant amount in lost sales and customer good will. As such, it has become increasingly problematic and, in some cases, infeasible to rely on engineers to manually configure all replacement devices in modern computing environments.

### SUMMARY

One embodiment described herein provides a method that includes determining that a first computing device has been added to a computing environment and that at least one feature of the first computing device is unconfigured. The method includes initiating, at the first computing device, a discovery process to identify a plurality of endpoint devices communicatively coupled to the first computing device using a first data communications network. The method also includes transmitting, over the first data communications network, at least one network message to the plurality of endpoint devices, requesting device name information stored on the plurality of endpoint devices. Additionally, the method includes receiving, from the plurality of endpoint devices, device name data specifying at least two potential device identifiers for the first computing device. The method includes initiating, by operation of one or more computer processors of the first computing device, an arbitration procedure to select a first device identifier from the at least two potential device identifiers. The method additionally includes requesting, from a device configuration server, using a second data communications network, device configuration data associated with the first device identifier. The method further includes validating, at the first computing device, the device configuration data received from the device configuration server and configuring the at least one feature of the first computing device.

Another embodiment described herein provides a computing device that includes one or more computer processors and a memory containing computer program code that, when executed by the one or more computer processors, performs an operation. The operation includes determining that the computing device has been added to a computing environment and that at least one feature of the computing device is unconfigured. The operation also includes receiving, from a plurality of endpoint devices communicatively coupled to the computing device, device name data specifying a first potential device identifier for the computing device. The operation further includes requesting, from a device configuration server, device configuration data associated with the first potential device identifier and, upon successfully validating the device configuration data, configuring the at least one feature of the computing device, using the device configuration data.

Another embodiment provides a method that includes receiving, from a plurality of endpoint devices communicatively coupled to a first computing device, device name data specifying at least two potential device identifiers for the first computing device. The method includes ranking, by operation of one or more computer processors, the at least two potential device identifiers, based on, for each of the at least two potential device identifiers, a respective number of endpoint devices in the plurality of endpoint devices that provided the potential device identifier and selecting a first device identifier as the most common potential device name, based on the ranking. Additionally, the method includes requesting, from a device configuration server, device configuration data associated with the first device identifier. The method further includes configuring at least one feature of the first computing device, using the device configuration data.

### BRIEF DESCRIPTION OF THE DRAWINGS

A more detailed description of the disclosure, briefly summarized above, may be had by reference to various embodiments, some of which are illustrated in the appended drawings. While the appended drawings illustrate select embodiments of this disclosure, these drawings are not to be considered limiting of its scope, for the disclosure may admit to other equally effective embodiments.
FIG. 1 is a block diagram illustrating a system configured with a fast device replacement control module, according to one embodiment described herein.
FIG. 2 illustrates a computing environment that includes a fieldbus device configured with a fast device replacement control module, according to one embodiment described herein.
FIGS. 3A-D illustrate a system configured with a fast device replacement control module at various points in time during a fast device replacement workflow, according to one embodiment described herein.
FIG. 4 is a flow diagram illustrating a method for configuring a replacement device, according to one embodiment described herein.
FIG. 5 is a flow diagram illustrating a method for configuring a replacement device when multiple different device identifiers are retrieved, according to one embodiment described herein.
FIG. 6 is a flow diagram illustrating an alternate method for configuring a replacement device when multiple different device identifiers are retrieved, according to one embodiment described herein.
FIG. 7 is a flow diagram illustrating a method for configuring at least one feature of a computing device using device identifiers stored on endpoint devices, according to one embodiment described herein.
FIG. 8 is a flow diagram for configuring at least one feature of a computing device using stored potential device identifiers, according to one embodiment described herein.
FIG. 9 is a flow diagram illustrating a method of configuring a computing device, based on a ranking of stored device identifiers, according to one embodiment described herein.

Identical reference numerals have been used, where possible, to designate identical elements that are common to the figures. However, elements disclosed in one embodiment may be beneficially utilized on other embodiments without specific recitation.

### DETAILED DESCRIPTION

Efficient and reliable device replacement services are becoming increasingly important, as the number of interconnected electronic devices continues to grow. In many modern computing environments, it is becoming infeasible to rely exclusively on technicians/maintenance personnel to manually replace electronic devices, as (amongst other reasons) the manual configuration of replacement electronic devices can be a time-consuming process and can require special tools or specific multi-disciplinary technical expertise and knowledge. While conventional solutions exist for automatically configuring replacement devices, such solutions can require a rigid network topology for the network devices. That is, a replacement device can only be configured using such conventional systems when the replacement device is in the exact same position within the static network topology as the device being replaced. As enforcing a static network topology is not always desirable or even possible, such conventional solutions are inadequate for solving the technical problem of automatically configuring replacement electronic devices.

As such, embodiments described herein provide techniques for automatically naming and configuring a replacement electronic device using data storage on lower-level devices (also referred to herein as endpoint or end node devices). In doing so, embodiments described herein can minimize downtime of replacement devices, in large part by facilitating the automatic transfer of settings and configuration parameters to the replacement device. This minimizes or eliminates the need for manual configuration (*e.g.,* by an engineer) to bring the replacement device into service, and further eliminates the need for users to know and keep track of the network name of devices being replaced. Moreover, embodiments can reduce the potential for user error when setting the device's network name, and avoid the need for users to manually configure the new device.

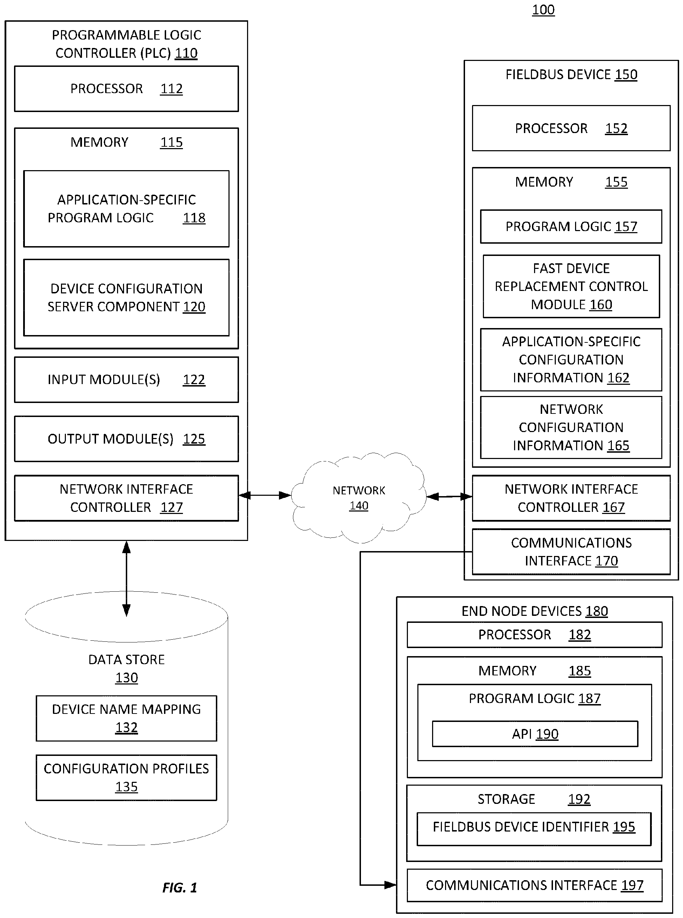

FIG. 1 is a block diagram illustrating a system configured with a fast device replacement control module, according to one embodiment described herein. As shown, the system 100 includes a programmable logic controller (PLC) 110 and a fieldbus device 150, connected via a data communications network 140. Generally, the network 140 represents any suitable data communications network, with examples including (without limitation) a local area network (LAN), a wide area network (WAN), an IEEE 802.11 wireless network, and so on.

The PLC 110 includes one or more computer processors 112, a memory 115, an input module(s) 122, an output module(s) 125, and a network interface controller 127. Generally, the input module(s) 122 represent devices that provide inputs to the PLC 110. Such inputs may be provided, for example, in the form of digital inputs or analog signals. In the case of analog signals, the input module 122 can include circuitry for converting the analog signals into logic signals that can be processed by the processor 112. The output modules 125 generally convert logic signals from the processor 112 into digital or analog values for use in controlling output devices. The memory 115 contains application-specific program logic 118 and a device configuration server component 120. Generally, the application-specific program logic 118 represents software logic that performs various application-specific operations, depending on the type of the computing environment 100. For example, a PLC device 110 within an industrial automation environment may perform different application-specific operations than a PLC device 110 within a fulfillment center environment.

The data store 130 includes a device name mapping 132 and configuration profiles 135. The device name mapping 132 generally represents a data structure that maps device identifiers (also referred to herein as device names) with configuration profiles in the configuration profiles 135. For example, the device name mapping 132 could represent a table within a database (*e.g*., having a first column for device identifiers, a second column for a configuration profile identifier and rows storing individual mappings between device identifiers and configuration profile identifiers). More generally, however, any sort of mapping between device names and configuration profiles can be used, consistent with the functionality described herein.

Generally, the fieldbus device 150 represents a computing device within an industrial network system for real-time distributed control. In the depicted embodiment, the fieldbus device 150 serves as a management device for the end node devices 180, which are generally lower level devices (*e.g*., motor starters, power devices, sensor devices, *etc.*)*.* For example, the fieldbus device 150 may orchestrate the performance of an operation by controlling the actions of one or more of the end node devices 180. As another example, the fieldbus device 150 could collect data (*e.g*., sensor data) from the end node devices 180, and could process and aggregate this data for subsequent transmission to the PLC 110. The PLC 110 can generally perform higher level management functions and may manage the fieldbus device 150 as well as other fieldbus devices (not shown) within the environment 100.

The fieldbus device 150 includes a processor 152, a memory 155, a network interface controller 167 and a communications interface 170. The memory 155 includes program logic 157, a fast device replacement control module 160, application-specific configuration information 162 and network configuration information 165. Generally, the program logic 157 represents application-specific program logic to carry out one or more functions that have been assigned to the fieldbus device 150. For example, the operations the fieldbus device 150 may be configured to perform within an industrial automation environment may differ from the operations the fieldbus device 150 performs in other computing environments, and thus the program logic 157 may vary depending on the type of environment in which the fieldbus device 150 is deployed. In the depicted embodiment, the end node devices 180 each contain a processor 182, a memory 185, storage 192 and a communications interface 197. The memory 185 contains program logic 187, which in turns contains an API 190. The storage 192 contains a fieldbus device identifier 195.

Any general-purpose computer systems used in various embodiments of this disclosure may be, for example, general-purpose computers with general-purpose computer processors. For example, the processors 112, 152 and 182 may include processors based on Intel PENTIUM-type processor, Motorola PowerPC, Sun UltraSPARC, Hewlett-Packard PA-RISC processors, or any other type of processor. Generally, the processors 112, 152 and 182 represent any suitable processor(s), including commercially available processors such as the well-known Pentium class processor available from the Intel Corporation. Many other processors are available. Such a processor usually executes an operating system (not shown) which may be, for example and without limitation, Microsoft® Windows®, Apple® macOS®, Solaris®, UNIX®, or Linux®. Many other operating systems may be used.

The memories 115, 155 and 185 generally represents any suitable form of addressable computer memory. For example, the memories 115, 155 and 185 may represent a volatile memory (*e.g*., static random-access memory (SRAM)) and/or a nonvolatile memory (*e.g*., Flash memory). More generally, any suitable form of memory device(s) can be used, consistent with the functionality described herein. Generally, the processor and operating system together define a computer platform for which application programs in high-level programming languages are written. It should be understood that embodiments of the present disclosure are not limited to a particular computer system platform, processor, operating system, or network. Also, it should be apparent to those skilled in the art that the present disclosure is not limited to a specific programming language or computer system. Further, it should be appreciated that other appropriate programming languages and other appropriate computer systems could also be used.

One or more portions of the computer system may be distributed across one or more computer systems coupled to a communications network. For example, as discussed above, a computer system that determines available power capacity may be located remotely from a system manager. These computer systems also may be general-purpose computer systems. For example, various aspects of the disclosure may be distributed among one or more computer systems configured to provide a service (*e.g*., servers) to one or more client computers, or to perform an overall task as part of a distributed system. For example, various aspects of the disclosure may be performed on a client-server or multi-tier system that includes components distributed among one or more server systems that perform various functions according to various embodiments of the disclosure. These components may be executable, intermediate (*e.g.,* IL) or interpreted (*e.g*., Java) code which communicate over a communication network (*e.g*., the Internet) using a communication protocol (*e.g*., TCP/IP). For example, one or more database servers may be used to store device data, such as expected power draw, that is used in designing layouts associated with embodiments of the present disclosure.

The fieldbus device 150 is communicatively coupled with the end node devices 180 via the communications interface 170 and a communications interface 197 for each of the end node devices 180. For example, the fieldbus device 150 and end node devices 180 could be connected in a daisy chain fashion, forming a linear network topology. However, numerous different configurations and network topologies are contemplated and more generally, any suitable configuration and topology can be used, consistent with the functionality described herein.

According to one embodiment, the fast device replacement component 160 can determine that the fieldbus device 150 has been added to the computing environment 100 and that at least one feature of the fieldbus device is unconfigured or misconfigured for its current environment. For example, a device could be misconfigured for its current environment when the device was moved from a different computing environment (or a different logical position within the computing environment) to its current position. In such an example, the fast device replacement component 160 could determine that the device's configuration data does not match its current physical configuration. As an example, if the device's configuration data specifies that it is connected to endpoint devices A, B and C, but the fast device replacement component 160 on the device detects that the device is currently connected to devices X, Y, and Z (e.g., through a network discovery protocol), the fast device replacement component 160 could determine that the device is misconfigured for its current physical configuration.

The fast device replacement component 160 can then initiate a discovery process to identify a plurality of endpoint devices communicatively coupled to the first computing device using a first data communications network. Generally, a number of different device discovery protocols can be used by the fast device replacement component 160 in discovering the endpoint devices. For example, the fast device replacement component 160 could perform a Devices Profile for Web Services (DPWS) discovery process to discover the connected endpoint devices. As another example, the fast device replacement component 160 could initiate a Link Layer Discover Protocol (LLDP) discovery process to discover the endpoint devices. More generally, any suitable discovery operation can be utilized, consistent with the functionality described herein.

Once the plurality of endpoint devices is discovered, the fast device replacement component 160 can transmit (*e.g.*, using the communications interface 170) at least one network message to the plurality of endpoint devices, requesting device name information stored on the plurality of endpoint devices. Generally, the end node devices 180 each include program logic 187 that provides an API 190. The API 190 includes functions that the fast device replacement component 160 can utilize to store and retrieve the fieldbus device identifier 195 on the storage 192 of the end node devices 180. For example, once the fieldbus device 150 is initially configured, the fast device replacement component 160 can transmit a network message(s) to the API 190 to store the fieldbus device identifier 195 of the configured fieldbus device 150 on the storage 192 of the end node devices 180. When a replacement fieldbus device 150 is installed, the fast device replacement component 160 on the replacement fieldbus device 150 can then transmit a network message(s) to the API 190 to retrieve the previously stored fieldbus device identifier 195 from the storage 192 of the end node devices 180.

In one embodiment, the fast device replacement component 160 can receive the fieldbus device identifier 195 from each of the end node devices 180 and the fast device replacement component 160 can determine that the received identifiers are all the same. In such a case, the fast device replacement component 160 can transmit a message to the device configuration server component 120 of the PLC, requesting device configuration information corresponding to the fieldbus device identifier. Upon receiving the request, the device configuration server component 120 could perform a lookup in the device name mapping 132 using the fieldbus device identifier specified within the request to determine a configuration profile from the configuration profiles 135 that corresponds to the fieldbus device identifier. The device configuration server component 120 could then return the corresponding configuration profile to the fieldbus device 150 (*e.g*., using the network 140).

Upon receiving the configuration profile, the fast device replacement component 160 could configure the application-specific configuration information 162 and the network configuration information 165 on the fieldbus device 150 using the configuration profile. In one embodiment, the fast device replacement component 160 is configured to perform a validation operation on the received configuration profile, prior to configuring the fieldbus device 150 using the configuration profile. For example, the fieldbus device 150 could store (*e.g*., in memory 155) data specifying a type of the fieldbus device 150, and the fast device replacement component 160 could verify that device type information specified in the received configuration profile matches the device type stored on the fieldbus device 150. As another example, the configuration profile could specify a number and type information of connected end node devices, and the fast device replacement component 160 could verify that the number and type information matches the number of end node devices 180 connected to the fieldbus device 150 and that the device types of the end node devices 180 match the device types specified within the configuration profile. More generally, however, any suitable form of validation operation could be performed, consistent with the functionality described herein.

According to one embodiment, the fast device replacement component 160 can receive, from the plurality of endpoint devices, device name data specifying at least two potential device identifiers for the first computing device. That is, under certain circumstances, the fieldbus device identifiers 195 stored on the end node devices 180 may not all be the same. For example, one of the lower level devices could have been added after the device identifier was written to the other lower level devices by the fast device replacement component 160 of the previous device (*e.g*., the device being replaced). In such a situation, one of the lower level devices may provide a default identifier (or a different identifier from the lower level device's previous installation), rather than the device identifier associated with the device being replaced and previously stored in the other lower level devices.

In a scenario where multiple potential device identifiers are provided, the fast device replacement component 160 could initiate an arbitration procedure to select a first device identifier from the at least two potential device identifiers. For example, the fast device replacement component 160 could rank the potential device identifiers by a number of times they were provided and could select the most common potential device identifier as the first device identifier. For example, where one device provided a default device identifier and four other lower level devices all provided the same device identifier, the fast device replacement component 160 could select the device identifier provided by the four other lower level devices.

Once the first device identifier is selected using the arbitration procedure, the fast device replacement component 160 can request device configuration data associated with the first device identifier from the device configuration server component 120 of the PLC device 110. The fast device replacement component 160 could receive a configuration profile from the PLC device 110 and could validate the device configuration profile received from the device configuration server. Upon successfully validating the device configuration profile, the fast device replacement component 160 could configure at least one feature of the first computing device. For example, the fast device replacement component 160 could configure the application-specific configuration information 162 and the network configuration information 165 stored on the fieldbus device 150, using the received configuration profile.

By doing so, embodiments provide an improved fast device replacement function that provides faster device replacement relative to conventional solutions and reduces or eliminates the need for manual user intervention in the device replacement process. Moreover, by utilizing APIs and storage that is available on lower level devices, embodiments can provide this functionality without requiring additional specialized hardware. Furthermore, embodiments that store only the device identifier (and not the entire configuration profile) on the lower level devices can minimize the amount of computing resources (*e.g*., storage and processing resources) consumed on the lower level devices.

Of note, while the depicted embodiment illustrates a PLC device connected with a fieldbus device, which in turn manages multiple endpoint devices, such an architecture is provided for illustrative purposes only and without limitation. More generally, however, it is contemplated that embodiments described herein can be practiced in any similar environments with any computing devices replacing the PLC device 110, the fieldbus device 150, and the end node devices 180.

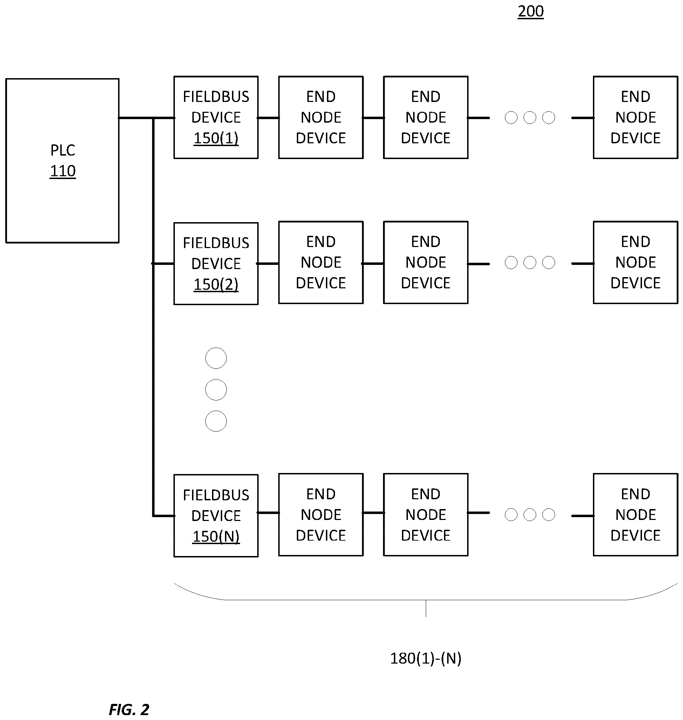

FIG. 2 illustrates a computing environment that includes a fieldbus device configured with a fast device replacement control module, according to one embodiment described herein. As shown, the system 200 includes the PLC device 110, connected with fieldbus devices 150(1)-(N), which are in turn connected to the endpoint devices 180(1)-(N). In the depicted embodiment, a number of different types of endpoint devices are shown, including motor starter devices, modular I/O systems, motors, sensor devices, and so on. As discussed above, the endpoint devices 180(1)-(N) may provide an API 190 that the fast device replacement component 160 can interact with to store a fieldbus device identifier and to retrieve stored fieldbus device identifiers. Of note, while certain endpoint devices 180(1)-(N) are shown in the system 200, such examples are provided for illustrative purposes only and without limitation. More generally, any computing device capable of providing a suitable API and storing (directly or indirectly) a fieldbus device identifier can be used, consistent with the functionality described herein.

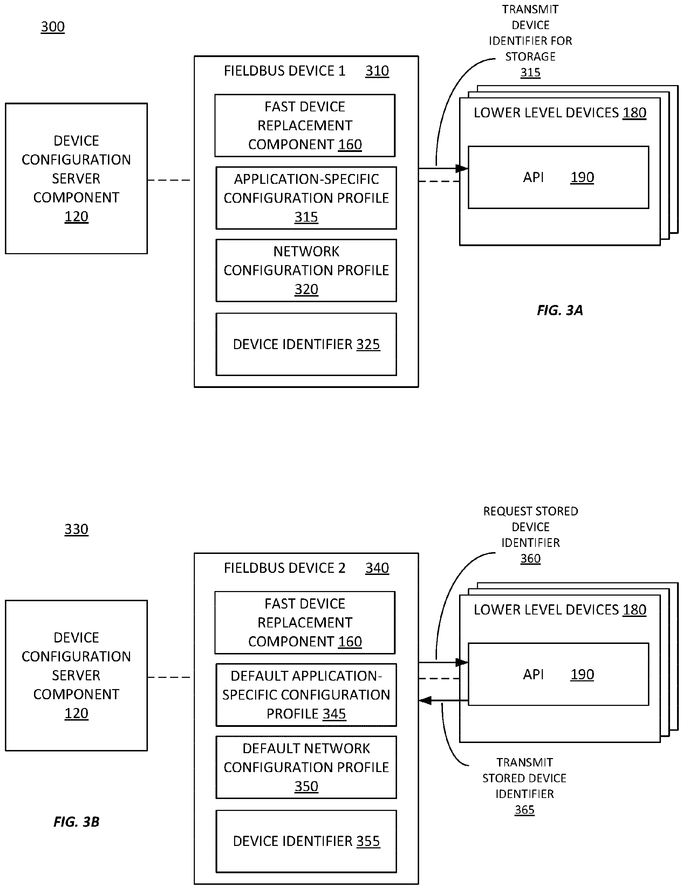

FIGS. 3A-D illustrate a system configured with a fast device replacement control module at various points in time during a fast device replacement workflow, according to one embodiment described herein. As shown, FIG. 3A is a diagram 300 that includes the device configuration server component 120, a first fieldbus device 310 and lower level devices 180. The first fieldbus device 310 includes the fast device replacement component 160, an application-specific configuration profile 315, a network configuration profile 320 and a device identifier 325. In the illustrated example, the fast device replacement component 160 performs a storage operation 315, to write the device identifier 325 to storage of the lower level devices 180 using the APIs 190.

For purposes of the present example, assume that the first fieldbus device 310 needs to be replaced (*e.g.*, due to a device failure). FIG. 3B is a diagram 330, where the first fieldbus device 310 has been replaced by a second fieldbus device 340. As shown, the second fieldbus device 340 includes an instance of the fast device replacement component 160, a default application-specific configuration profile 345, a default network configuration profile 350 and a default device identifier 355. Thus, in the present example, the second fieldbus device 340 represents an unconfigured fieldbus device that is currently set with default configuration information and a default device identifier.

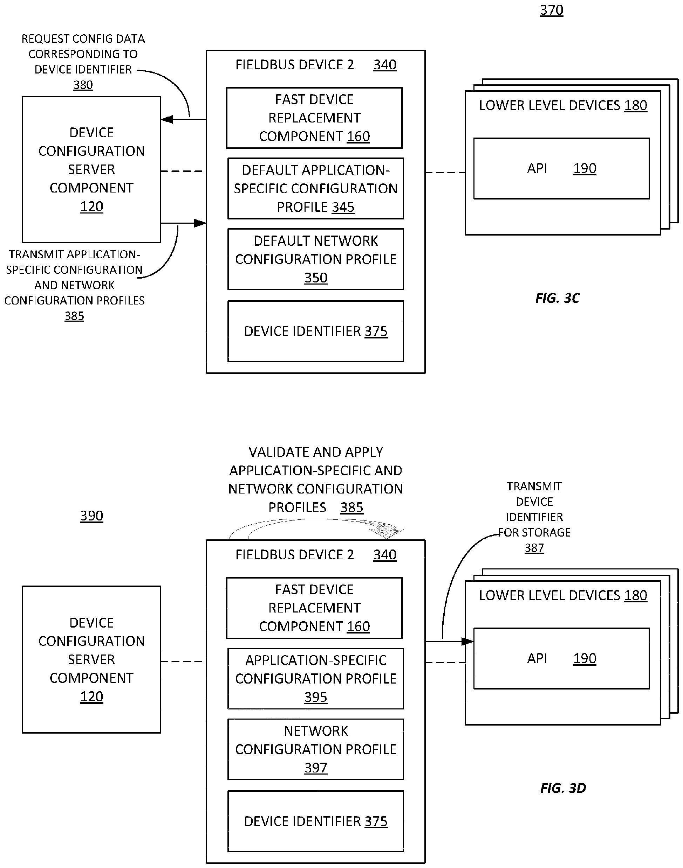

In the depicted example, the fast device replacement component 160 transmits a request for a stored identifier from the API 190 of the lower level devices 180 (arrow 360) and, in response, the lower level devices 180 transmit their stored device identifiers to the fast device replacement component 160 (arrow 365). FIG. 3C illustrates a diagram 370, where the fast device replacement component 160 requests configuration data corresponding to one of the device identifiers from the device configuration server component 120 (arrow 380). For example, where the lower level devices 180 all provided the same device identifier, the fast device replacement component 160 can request the configuration information corresponding to the device identifier from the device configuration server component 120. Where the lower level devices provided two or more different device identifiers, the fast device replacement component 160 can perform an arbitration operation to select one of the provided device identifiers and can transmit a request for the selected device identifier. The selected device identifier (or the only device identifier provided, in an example where the lower level devices 180 all provided the same device identifier) is shown in Fig. 3C as device identifier 375.

In response to the request, the device configuration server component 120 transmits application-specific configuration and network configuration profiles corresponding to the device identifier (arrow 385). As shown in the diagram 390 illustrated in Fig. 3D, the fast device replacement component 160 can then perform a validation operation to ensure the validity of the received profiles and can apply the profiles to configure the second fieldbus device (arrow 385). As a result, the second fieldbus device 340 as shown in Fig. 3D is configured with the application-specific configuration profile 395, the network configuration profile 397 and is assigned the device identifier 375. Additionally, in the depicted embodiment, once the device 340 is successfully configured, the fast device replacement component 160 transmits the device identifier used in the configuration to all currently connected lower level devices 180 (arrow 387). Thus, even if the lower level devices provided two or more different identifiers previously, the fast device replacement component 160 can store the selected device identifier used in the configuration on all of the lower level devices to help avoid such inconsistency in future device replacement operations.

Thus, the fast device replacement component 160 can configure the second fieldbus device 340 without requiring user intervention by utilizing storage and functionality provided by the lower level devices 180. Moreover, the depicted embodiment generally does not require a substantial amount of storage space on the lower level device 180, as the stored device identifiers are typically somewhat small in size (*e.g*., 20 bytes). While one of ordinary skill in the art will recognize that the size of a device identifier can vary depending on the implementation, such a device identifier is typically much smaller than the configuration profiles (*e.g*., application-specific configuration profile 395 and network configuration profile 397) that are used to configure the device 340.

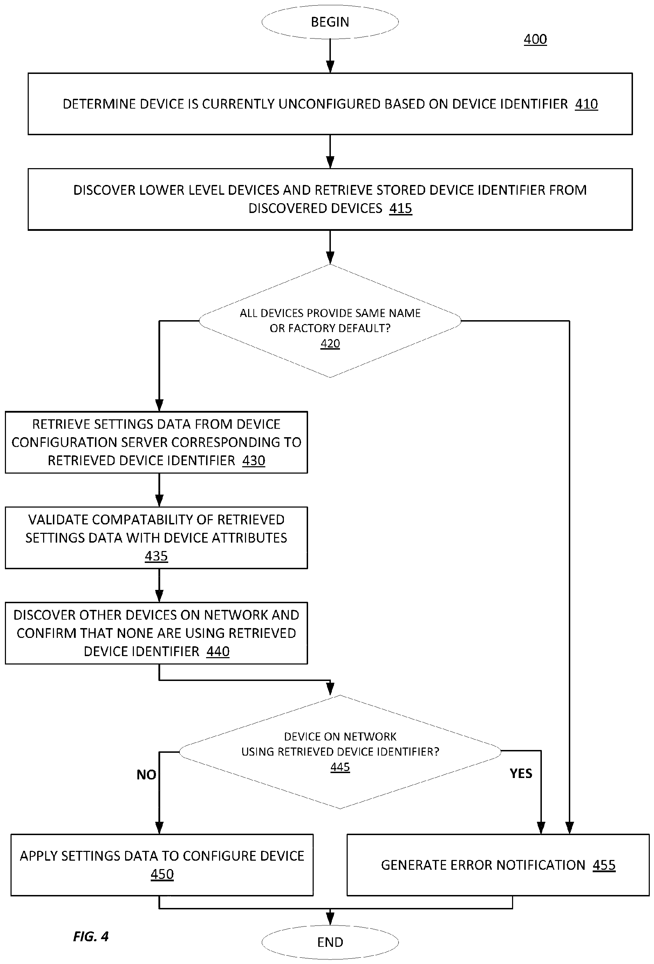

FIG. 4 is a flow diagram illustrating a method for configuring a replacement device, according to one embodiment described herein. As shown, the method 400 begins at block 410, where the fast device replacement component 160 determines that at least one of the devices needs to be configured (e.g., the device is currently unconfigured, the device is misconfigured, etc.), based on a device identifier of the device. For example, the fast device replacement component 160 could determine that the device has a device identifier that is equal to the default device identifier for the type of the device (*e.g*., by comparing the current device identifier for the device with a preconfigured default device identifier). As another example, the fast device replacement component 160 could determine that the device's current configuration does not match the device's current installation. More generally, the fast device replacement component 160 can be configured to recognize any number of different situations in which the device should be configured, consistent with the functionality described herein.

The fast device replacement component 160 then performs a discovery operation to discover lower level devices and retrieves stored device identifiers from the discovered devices (block 415). For example, the fast device replacement component 160 could transmit a request for a previously stored device identifier to the API 190 provided by the end node devices 180. The fast device replacement component 160 then determines whether all of the end node devices provided the same device identifier or all provided a factory default identifier (block 420). In the depicted embodiment, if the fast device replacement component 160 determines that not all the provided identifiers were the same (*i.e*., at least two different device identifiers were provided), the fast device replacement component 160 generates an error notification (block 455) and the method 400 ends.

If instead the fast device replacement component 160 determines that the provided identifiers are all the same, the fast device replacement component 160 retrieves settings data from the device configuration server component 120 (*e.g.,* executing on PLC 110) corresponding to the retrieved device identifier (block 430). For example, the fast device replacement component 160 could transmit a request to the device configuration server component 120 using the network 140, requesting a configuration profile corresponding to the device identifier. The device configuration server component 120 could then use the device name mapping 132 in the data store 130 to determine a configuration profile(s) corresponding to the device identifier, and could return the determined configuration profile(s) to the fast device replacement component 160. For example, such a configuration profile could include network configuration data, application-specific configuration data, and more generally any sort of configuration data, consistent with the functionality described herein.

The fast device replacement component 160 validates the compatibility of the retrieved settings data with attributes of the device being configured (block 435). For example, the fast device replacement component 160 could compare a device type of the device with device type information specified within the retrieved settings data to ensure these values match. As another example, the fast device replacement component 160 could compare a set of lower level specified within the retrieved configuration data with the set of lower level devices discovered using the discovery operation at block 415.

In the depicted embodiment, the fast device replacement component 160 discovers other devices on the network 140 using a second device discovery procedure to confirm that none of these devices are currently using the retrieved device identifier (block 440). The method 400 then proceeds to decision block 445, where the fast device replacement component 160 determines whether another device on the network 140 is using the device identifier. If so, the fast device replacement component 160 generates an error notification (block 455) and the method 400 ends. If the fast device replacement component 160 determines that no other device is using the device identifier, the fast device replacement component 160 applies the settings data to automatically configure the device, and the method 400 ends.

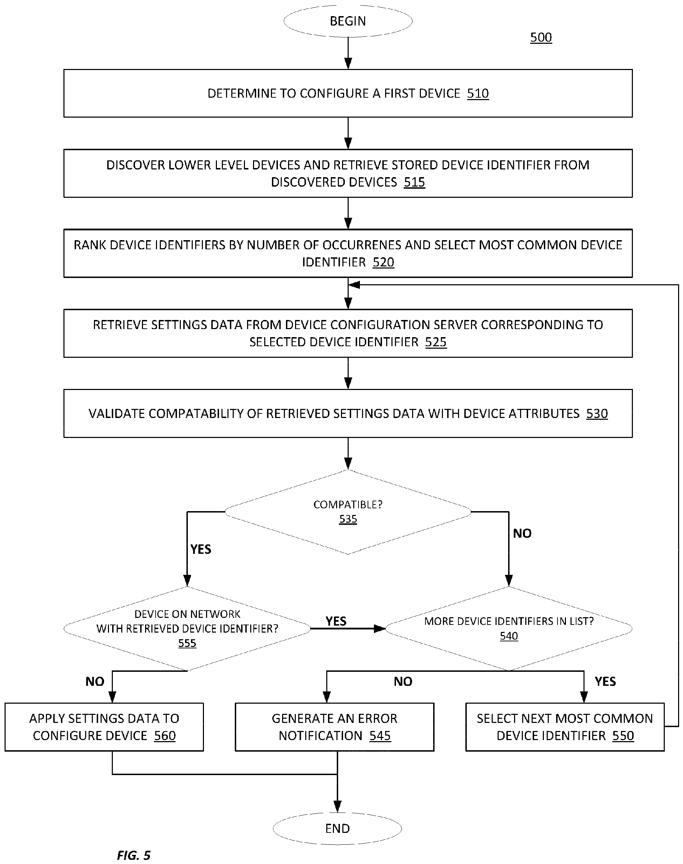

FIG. 5 is a flow diagram illustrating a method for configuring a replacement device when multiple different device identifiers are retrieved, according to one embodiment described herein. As shown, the method 500 begins at block 510, where the fast device replacement component 160 determines to configure the device on which the fast device replacement component 160 is executing. For example, the fast device replacement component 160 could determine the device should be configured, based on the device's unique identifier being set to a default value. As another example, the fast device replacement component 160 could determine that the device's current configuration does not match the device's current physical configuration and connections (e.g., the configuration information may specify that there are two connected lower level devices of particular types, while the device may be connected to five lower level devices of different types). The fast device replacement component 160 performs a discovery operation to discover lower level devices communicatively coupled to the device and retrieves previously stored device identifiers from the discovered devices (block 515).

In the depicted embodiment, the fast device replacement component 160 performs a ranking operation to rank the received device identifiers based on a number of occurrences for each device identifier (*i.e.*, how many times the respective device identifiers were received from the lower level devices) and selects a most common device identifier (block 520). For example, if a first device identifier is received six times from the lower level devices, but a second device identifier was provided a single time by one of the lower level devices, the fast device replacement component 160 could select the first device identifier as the most common device identifier.

The fast device replacement component 160 retrieves settings data from a device configuration server (*e.g*., the device configuration server component 120 executing on the PLC device 110) using the selected device identifier (block 525). The fast device replacement component 160 then performs an operation to validate the retrieved settings data using attributes of the currently unconfigured device (block 530). The fast device replacement component 160 determines whether the settings data is compatible (block 535), and if so, the fast device replacement component 160 determines whether another device on the network is currently using the selected device identifier (block 555). If the device identifier is currently in use by another device, the fast device replacement component 160 determines whether there are additional device identifiers in the list of device identifiers (block 540). If the fast device replacement component 160 determines that there are more device identifiers in the list, the fast device replacement component 160 selects the next most common device identifier (block 550) and the method returns to block 525, where the fast device replacement component 160 retrieves settings data from the device configuration server associated with the next most common device identifier. If the fast device replacement component 160 determines the list does not contain any additional device identifiers, the fast device replacement component 160 generates an error notification (block 545) and the method 500 ends. If no other device on the network is using the device identifier, the fast device replacement component 160 applies the settings data to configure the device (block 560) and the method 500 ends.

If at block 535 the fast device replacement component 160 determines that the retrieved settings data is incompatible with the device, the fast device replacement component 160 determines whether there are additional device identifiers in the ranked list of identifiers (block 540). If the list contains additional device identifiers, the fast device replacement component 160 selects the next most common device identifier in the list (block 550) and the method returns to block 525, where the fast device replacement component 160 retrieves settings data for the next most common device identifier. If the fast device replacement component 160 determines that no additional device identifiers remain in the list, the fast device replacement component 160 generates an error notification (block 545) and the method 500 ends.

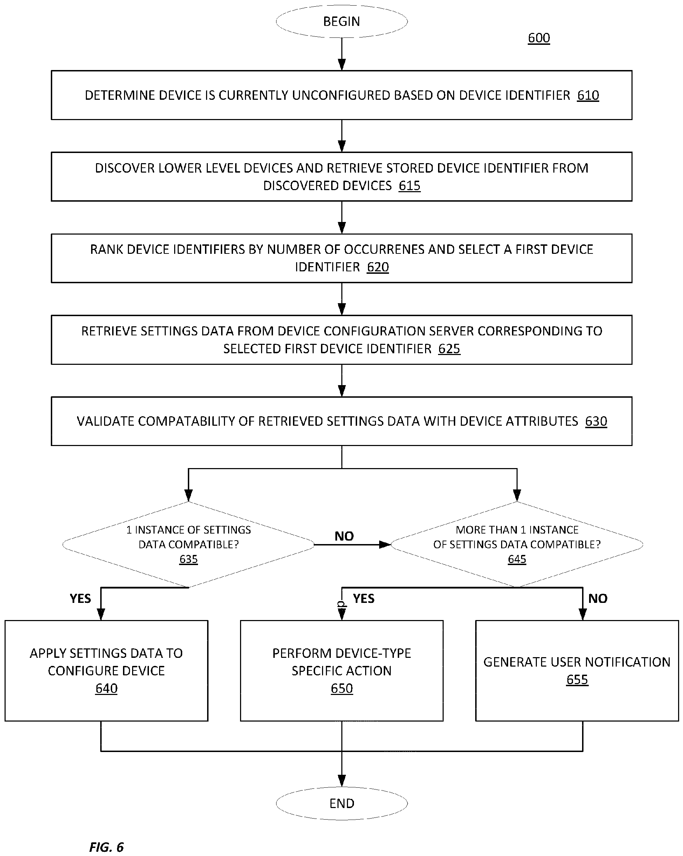

FIG. 6 is a flow diagram illustrating an alternate method for configuring a replacement device when multiple different device identifiers are retrieved, according to one embodiment described herein. As shown, the method 600 begins at block 610, where the fast device replacement component 160 determines that a device (*e.g*., the device executing the fast device replacement component 160) is currently unconfigured. The fast device replacement component 160 discovers a number of lower level devices (*e.g*., using a device discovery protocol) and retrieves stored device identifiers from the discovered lower level devices (*e.g*., by querying an API of the lower level devices) (block 615). The fast device replacement component 160 then ranks the retrieved device identifiers (*e.g.*, based on a number of times each device identifier was received from a lower level device) and selects a most common device identifier (block 620).

The fast device replacement component 160 retrieves settings data from a device configuration server corresponding to each of the device identifiers (block 625). In other words, in the depicted embodiment, the fast device replacement component 160 requests configuration data for multiple different device identifiers from the configuration server. In such an example, the device configuration server component 120 can reference the device name mapping 132 multiple times to retrieve multiple different configuration profiles from the configuration profiles 135. The fast device replacement component 160 performs a validation operation for the retrieved configuration profiles, based on the attributes of the unconfigured device (block 630).

The fast device replacement component 160 determines whether only a single retrieved profile was determined to be compatible based on the validation operation (block 635), and if so, the fast device replacement component 160 applies the settings data for the profile (block 640) and the method 600 ends. In one embodiment, the fast device replacement component 160 can also perform an operation to determine whether any other devices on the network are using the device identifier. If the fast device replacement component 160 determines that another device is using the same device identifier, the fast device replacement component 160 could, for example, attempt to use another device identifier received from at least one of the lower level devices. As another example, upon determining that another device on the network is using the same device identifier, the fast device replacement component 160 could generate an error notification for a user. Such examples are provided without limitation and for illustrative purposes only, and more generally, the fast device replacement component 160 can be configured to perform any suitable action when detecting a duplicate device identifier, consistent with the functionality described herein.

If the fast device replacement component 160 determines that a single profile wasn't found to be valid, the fast device replacement component 160 determines whether more than one profile was found to be valid (block 645). If the fast device replacement component 160 determines that more than 1 profile was not found to be valid, the fast device replacement component 160 generates a user notification (*e.g*., an error message) (block 655) and the method 600 ends. If the fast device replacement component 160 determines that multiple profiles were found to be compatible with the device, the fast device replacement component 160 performs a device-type specific action (block 650) and the method 600 ends. For example, in one embodiment, the device-type specific action may include generate an error notification. As another example, the device-type specific action could include a further arbitration process, where the fast device replacement component 160 evaluates additional criteria (*e.g*., a number of connected lower level devices, a type(s) of the connected lower level devices, *etc.*) against data in the retrieved profiles to select one of the profiles to apply.

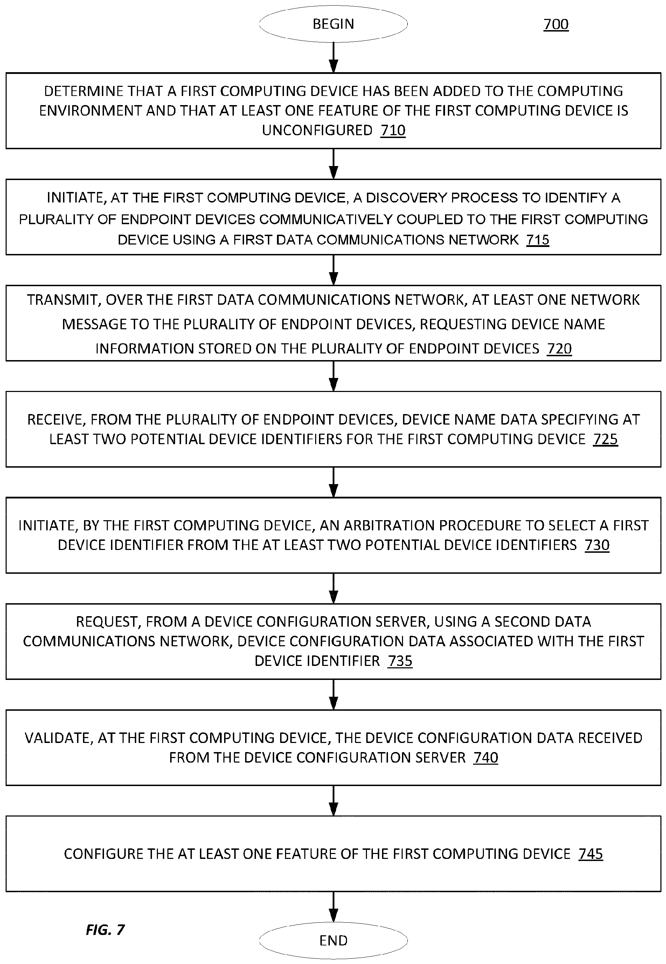

FIG. 7 is a flow diagram illustrating a method for configuring at least one feature of a computing device using device identifiers stored on endpoint devices, according to one embodiment described herein. As shown, the method 700 begins at block 710, where the fast device replacement component 160 determining that a first computing device has been added to a computing environment and that at least one feature of the first computing device is unconfigured. For example, the fast device replacement component 160 could determine that a device identifier assigned to the computing device is a default device identifier, indicating that the computing device has not yet been setup.

The fast device replacement component 160 initiates a discovery process to identify a plurality of endpoint devices communicatively coupled to the first computing device using a first data communications network (block 715). Once the fast device replacement component 160 has discovered the endpoint devices, the fast device replacement component 160 transmits, over the first data communications network, at least one network message to the plurality of endpoint devices, requesting device name information stored on the plurality of endpoint devices (block 720). In one embodiment, the endpoint devices in the plurality of endpoint devices are daisy chained together using a serial data communications link. In such an embodiment, the device replacement component 160 can utilize a device discovery protocol to identify

At block 725, the device replacement component 160 receives, from the plurality of endpoint devices, device name data specifying at least two potential device identifiers for the first computing device. The device replacement component 160 initiates, by operation of one or more computer processors of the first computing device, an arbitration procedure to select a first device identifier from the at least two potential device identifiers (block 730). The device replacement component 160 requests, from a device configuration server, using a second data communications network, device configuration data associated with the first device identifier (block 735). In one embodiment, the second data communications network is an Ethernet network, such as a local area network (LAN), a wide area network (WAN), *etc.*

The device replacement component 160 validates the device configuration data received from the device configuration server (block 740). For example, the device replacement component 160 could verify that a number of attached endpoint devices specified in the device configuration information matches a number of endpoint devices attached to the first computing device. As another example, the device replacement component 160 could verify that a device type specified in the device configuration information matches a device type of the first computing device. The device replacement component 160 then configures the at least one feature of the first computing device (block 745), and the method 700 ends.

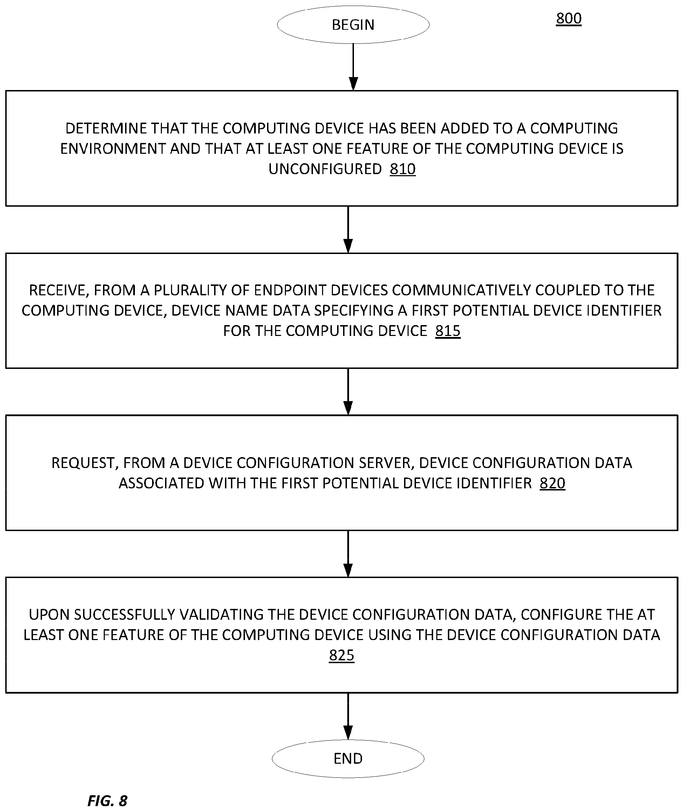

FIG. 8 is a flow diagram for configuring at least one feature of a computing device using stored potential device identifiers, according to one embodiment described herein. As shown, the method 800 begins at block 810, where the device replacement component 160 determines that a computing device has been added to a computing environment and that at least one feature of the computing device is unconfigured. The device replacement component 160 receives, from a plurality of endpoint devices communicatively coupled to the computing device, device name data specifying a first potential device identifier for the computing device (block 815).

At block 820, the device replacement component 160 requests, from a device configuration server, device configuration data associated with the first potential device identifier (block 825). At block 830, upon successfully validating the device configuration data, the device replacement component 160 configures the at least one feature of the computing device, using the device configuration data, and the method 800 ends.

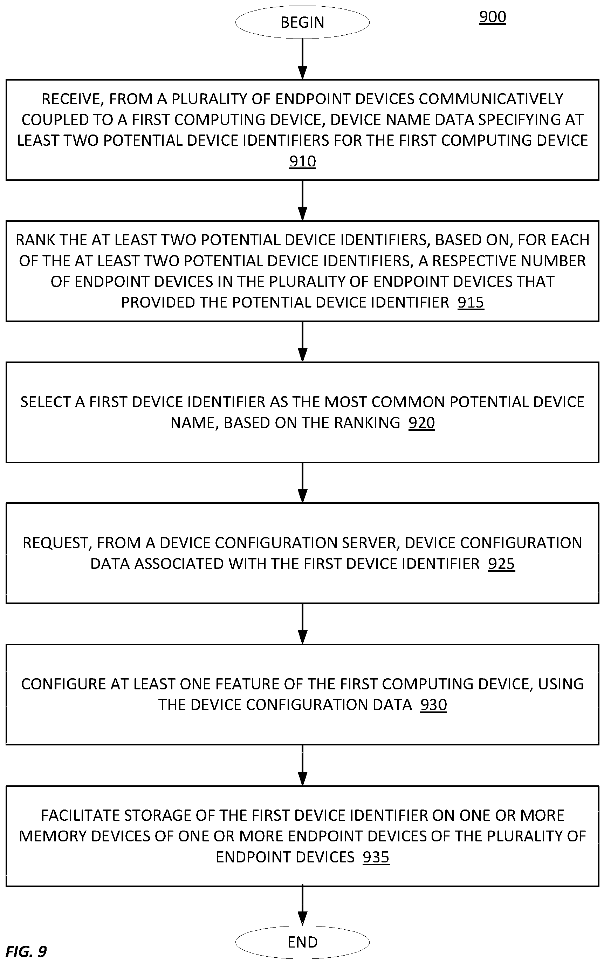

FIG. 9 is a flow diagram illustrating a method of configuring a computing device, based on a ranking of stored device identifiers, according to one embodiment described herein. As shown, the method 900 begins at block 910, where the device replacement component 160 receives, from a plurality of endpoint devices communicatively coupled to a first computing device, device name data specifying at least two potential device identifiers for the first computing device. The device replacement component 160 then ranks the at least two potential device identifiers, based on, for each of the at least two potential device identifiers, a respective number of endpoint devices in the plurality of endpoint devices that provided the potential device identifier (block 915).

In the depicted embodiment, the device replacement component 160 selects a first device identifier as the most common potential device name, based on the ranking (block 920). The device replacement component 160 then requests, from a device configuration server, device configuration data associated with the first device identifier; (block 925) and the device replacement component 160 configures at least one feature of the first computing device, using the device configuration data (block 930), and the method 900 ends.

In the preceding, reference is made to various embodiments. However, the scope of the present disclosure is not limited to the specific described embodiments. Instead, any combination of the described features and elements, whether related to different embodiments or not, is contemplated to implement and practice contemplated embodiments. Furthermore, although embodiments may achieve advantages over other possible solutions or over the prior art, whether or not a particular advantage is achieved by a given embodiment is not limiting of the scope of the present disclosure. Thus, the preceding aspects, features, embodiments and advantages are merely illustrative and are not considered elements or limitations of the appended claims except where explicitly recited in a claim(s).

The various embodiments disclosed herein may be implemented as a system, method or computer program product. Accordingly, aspects may take the form of an entirely hardware embodiment, an entirely software embodiment (including firmware, resident software, micro-code, *etc.*) or an embodiment combining software and hardware aspects that may all generally be referred to herein as a "circuit," "module" or "system." Furthermore, aspects may take the form of a computer program product embodied in one or more computer-readable medium(s) having computer-readable program code embodied thereon.

Any combination of one or more computer-readable medium(s) may be utilized. The computer-readable medium may be a non-transitory computer-readable medium. A non-transitory computer-readable medium may be, for example, but not limited to, an electronic, magnetic, optical, electromagnetic, infrared, or semiconductor system, apparatus, or device, or any suitable combination of the foregoing. More specific examples (a non-exhaustive list) of the non-transitory computer-readable medium can include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. Program code embodied on a computer-readable medium may be transmitted using any appropriate medium, including but not limited to wireless, wireline, optical fiber cable, RF, *etc.,* or any suitable combination of the foregoing.

Computer program code for carrying out operations for aspects of the present disclosure may be written in any combination of one or more programming languages. Moreover, such computer program code can execute using a single computer system or by multiple computer systems communicating with one another (*e.g*., using a local area network (LAN), wide area network (WAN), the Internet, *etc.*)*.* While various features in the preceding are described with reference to flowchart illustrations and/or block diagrams, a person of ordinary skill in the art will understand that each block of the flowchart illustrations and/or block diagrams, as well as combinations of blocks in the flowchart illustrations and/or block diagrams, can be implemented by computer logic (*e.g*., computer program instructions, hardware logic, a combination of the two, *etc.*)*.* Generally, computer program instructions may be provided to a processor(s) of a general-purpose computer, special-purpose computer, or other programmable data processing apparatus. Moreover, the execution of such computer program instructions using the processor(s) produces a machine that can carry out a function(s) or act(s) specified in the flowchart and/or block diagram block or blocks.

The flowchart and block diagrams in the Figures illustrate the architecture, functionality and/or operation of possible implementations of various embodiments of the present disclosure. In this regard, each block in the flowchart or block diagrams may represent a module, segment or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

It is to be understood that the above description is intended to be illustrative, and not restrictive. Many other implementation examples are apparent upon reading and understanding the above description. Although the disclosure describes specific examples, it is recognized that the systems and methods of the disclosure are not limited to the examples described herein but may be practiced with modifications within the scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A method, comprising:
determining that a first computing device has been added to a computing environment and that at least one feature of the first computing device is unconfigured;
initiating, at the first computing device, a discovery process to identify a plurality of endpoint devices communicatively coupled to the first computing device using a first data communications network;
transmitting, over the first data communications network, at least one network message to the plurality of endpoint devices, requesting device name information stored on the plurality of endpoint devices;
receiving, from the plurality of endpoint devices, device name data specifying at least two potential device identifiers for the first computing device;
initiating, by operation of one or more computer processors of the first computing device, an arbitration procedure to select a first device identifier from the at least two potential device identifiers;
requesting, from a device configuration server, using a second data communications network, device configuration data associated with the first device identifier;
validating, at the first computing device, the device configuration data received from the device configuration server; and
configuring the at least one feature of the first computing device.

2. The method of claim 1, wherein initiating, by the first computing device, the arbitration procedure to select the first device identifier from the at least two potential device identifiers further comprises:
ranking the at least two potential device identifiers, based on, for each of the at least two potential device identifiers, a respective number of endpoint devices in the plurality of endpoint devices that provided the potential device identifier; and
selecting the first device identifier as the most common potential device name, based on the ranking.

3. The method of claim 2, further comprising:
upon the device configuration data failing the validation, selecting a next most common potential device name based on the ranking;
requesting, from the device configuration server, using the second data communications network, additional device configuration data associated with the selected next most common potential device name; and
validating, at the first computing device, the additional device configuration data.

4. The method of any of the preceding claims, wherein the first data communications network comprises a daisy chain connection between the first computing device and the plurality of endpoint devices, and wherein the second data communications network comprises an Ethernet network.

5. The method of any of the preceding claims, wherein configuring the at least one feature of the first computing device further comprises:
configuring at least one of (i) network connectivity information and (ii) application-specific configuration information, for the first computing device.

6. The method of any of the preceding claims, further comprising:
upon the device configuration data failing the validation, generating a notification indicating an error state has occurred at the first computing device.

7. The method of any of the preceding claims, wherein validating, at the first computing device, the device configuration data received from the device configuration server further comprises:
determining whether a current count of the plurality of endpoint devices identified by the discovery process matches a count of endpoint devices specified in the device configuration data; and
determining that an identified device type of the first computing device matches a device type specified in the device configuration data.

8. The method of any of the preceding claims, further comprising:
determining that a second computing device has been added to the computing environment and that a second at least one feature of the second computing device is unconfigured;
initiating, at the second computing device, a discovery process to identify a second plurality of endpoint devices communicatively coupled to the second computing device using a third data communications network;
transmitting, over the third data communications network, a second at least one network message to the second plurality of endpoint devices, requesting device name information stored on the second plurality of endpoint devices;
receiving, from the second plurality of endpoint devices, device name data specifying a second at least two potential device identifiers for the second computing device;
determining that none of the second at least two potential device identifiers can successfully pass a validation operation; and
generating a notification, requesting manual configuration of the second computing device.

9. The method of any of the preceding claims, wherein initiating, by the first computing device, the arbitration procedure to select the first device identifier from the at least two potential device identifiers further comprises:
determining that another computing device in the computing environment currently is assigned a second potential identifier of the at least two potential device identifiers; and
eliminating the second potential device identifier from consideration in the arbitration procedure.

10. The method of any of the preceding claims, further comprising:
transmitting a request to one or more endpoint devices of the plurality of endpoint devices to store the selected first device identifier on one or more storage memories of the one or more endpoint devices.

11. A computing device, comprising:
one or more computer processors; and
a memory containing computer program code that, when executed by the one or more computer processors, performs an operation comprising:
determining that the computing device has been added to a computing environment and that at least one feature of the computing device is unconfigured;
receiving, from a plurality of endpoint devices communicatively coupled to the computing device, device name data specifying a first potential device identifier for the computing device;
requesting, from a device configuration server, device configuration data associated with the first potential device identifier; and
upon successfully validating the device configuration data, configuring the at least one feature of the computing device using the device configuration data.

12. The computing device of claim 11, the operation further comprising:
Initiating a discovery process to identify the plurality of endpoint devices communicatively coupled to the computing device using a first data communications network; and
transmitting, over a first data communications network, at least one network message to the plurality of endpoint devices, requesting device name information stored on the plurality of endpoint devices.

13. The computing device of claim 11 or 12, selecting the first device identifier from the at least two potential device identifiers further comprises:
ranking the at least two potential device identifiers, based on, for each of the at least two potential device identifiers, a respective number of endpoint devices in the plurality of endpoint devices that provided the potential device identifier;
selecting the first device identifier as the most common potential device name, based on the ranking; and
prior to configuring the at least one feature of the computing device, validating the device configuration data received from the device configuration server.

14. The computing device of claim 13, the operation further comprising:
upon the device configuration data failing the validation, selecting a next most common potential device name based on the ranking;
requesting, from the device configuration server, using the second data communications network, additional device configuration data associated with the selected next most common potential device name; and
validating, at the first computing device, the additional device configuration data.

15. The computing device of any of claims 11 - 14, wherein the first data communications network comprises a daisy chain connection between the first computing device and the plurality of endpoint devices, wherein the second data communications network comprises an Ethernet network, and wherein configuring the at least one feature of the first computing device further comprises:
configuring at least one of (i) network connectivity information and (ii) application-specific configuration information, for the first computing device.

16. The computing device of any of claims 11 - 15, the operation further comprising:
upon the device configuration data failing the validation, generating a notification indicating an error state has occurred at the computing device, and
wherein validating the device configuration data received from the device configuration server further comprises:
determining whether a current count of the plurality of endpoint devices identified by the discovery process matches a count of endpoint devices specified in the device configuration data; and
determining that an identified device type of the first computing device matches a device type specified in the device configuration data.

17. The computing device of any of claims 11 - 16, the operation further comprising:
determining that a second computing device has been added to the computing environment and that a second at least one feature of the second computing device is unconfigured;
initiating, at the second computing device, a discovery process to identify a second plurality of endpoint devices communicatively coupled to the second computing device using a third data communications network;
transmitting, over the third data communications network, a second at least one network message to the second plurality of endpoint devices, requesting device name information stored on the second plurality of endpoint devices;
receiving, from the second plurality of endpoint devices, device name data specifying a second at least two potential device identifiers for the second computing device;
determining that none of the second at least two potential device identifiers can successfully pass a validation operation; and
generating a notification, requesting manual configuration of the second computing device.

18. The computing device of claim 17, wherein initiating, by the first computing device, the arbitration procedure to select the first device identifier from the at least two potential device identifiers further comprises:
determining that another computing device in the computing environment currently is assigned a second potential identifier of the at least two potential device identifiers; and
eliminating the second potential device identifier from consideration in the arbitration procedure.

19. A method, comprising:
receiving, from a plurality of endpoint devices communicatively coupled to a first computing device, device name data specifying at least two potential device identifiers for the first computing device;
ranking, by operation of one or more computer processors, the at least two potential device identifiers, based on, for each of the at least two potential device identifiers, a respective number of endpoint devices in the plurality of endpoint devices that provided the potential device identifier;
selecting a first device identifier as the most common potential device name, based on the ranking;
requesting, from a device configuration server, device configuration data associated with the first device identifier;
configuring at least one feature of the first computing device, using the device configuration data; and
facilitating storage of the first device identifier on one or more memory devices of one or more endpoint devices of the plurality of endpoint devices.

20. The method of claim 19, wherein the device name data is received using a first data communications network, wherein the device configuration data is requested using a second data communications network, wherein the first data communications network comprises a daisy chain connection between the first computing device and the plurality of endpoint devices, wherein the second data communications network comprises an Ethernet network, and wherein configuring the at least one feature of the first computing device further comprises:
configuring at least one of (i) network connectivity information and (ii) application-specific configuration information, for the first computing device.
